(19) Europäisches Patentamt
European Patent Office
Office européen des brevets

(11) **EP 4 741 448 A1**

(12) **EUROPEAN PATENT APPLICATION**
published in accordance with Art. 153(4) EPC

(43) Date of publication:
**13.05.2026 Bulletin 2026/20**

(21) Application number: 24835969.7

(22) Date of filing: **27.06.2024**

(51) International Patent Classification (IPC):
**C08J 5/18** (2006.01)  **B29C 61/06** (2006.01)
**G09F 3/04** (2006.01)  **B29K 67/00** (2006.01)
**B29K 105/02** (2006.01)

(52) Cooperative Patent Classification (CPC):
Y02W 30/80

(86) International application number:
**PCT/JP2024/023265**

(87) International publication number:
**WO 2025/009456 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.07.2023 JP 2023110168**

(71) Applicant: Toyobo Co., Ltd.
**Kita-ku
Osaka-shi, Osaka 530-0001 (JP)**

(72) Inventors:
• **ISHIMARU, Shintaro**
  **Inuyama-shi, Aichi 484-8508 (JP)**
• **HARUTA, Masayuki**
  **Inuyama-shi, Aichi 484-8508 (JP)**

(74) Representative: **Vossius & Partner
Patentanwälte Rechtsanwälte mbB
Siebertstraße 3
81675 München (DE)**

(54) **HEAT-SHRINKABLE POLYESTER FILM**

(57) The present invention addresses the problem of providing a heat-shrinkable polyester film having improved shrinkage finish properties without limiting the raw material composition. The present invention is a heat-shrinkable polyester film characterized by containing ethylene terephthalate as a main constituent component and satisfying items (1)-(4) below:

(1) A skirt ratio of 1-8% when the film is measured after being fixed in a state of being shrunk by 10% in a main shrinkage direction in 90°C hot air and heat-treated for one minute.

(2) A maximum heat shrinkage stress in the main shrinkage direction of 1-10 MPa when the film is fixed in a state of being shrunk by 10% in the main shrinkage direction in 90°C hot air and is measured while being heat-treated for one minute.

(3) A shrinkage rate of 20-72% in the main shrinkage direction when the film is immersed in 80°C hot water for 10 seconds.

(4) The average refractive index of the film is 1.57-1.585.

[Fig.1]

**Description**

TECHNICAL FIELD

The present invention relates to a heat-shrinkable polyester film suitable for label applications and container packaging. More specifically, the present invention is suitably used for labels for beverage bottles, banding of containers such as boxed meals containers, and the like, and is particularly excellent in environmental friendliness and finish property.

BACKGROUND ART

In recent years, heat-shrinkable films have been widely used for applications such as label packaging serving as both protection of glass bottles or plastic bottles and display of products, cap sealing, bundle packaging, and banding applications for binding boxed meal containers and the like.

Among such heat-shrinkable films, polyvinyl chloride-based films have low heat resistance, and further have problems that hydrogen chloride gas is generated at the time of incineration and are a cause of dioxin generation.

Polystyrene-based films are inferior in solvent resistance, require use of an ink having a special composition at the time of printing, need to be incinerated at a high temperature, and have a problem that a large amount of black smoke is generated with a strange odor at the time of incineration.

For this reason, heat-shrinkable polyester films, which have high heat resistance, are easy to incinerate, and are excellent in solvent resistance, tend to be widely used as shrink labels.

Among them, heat-shrinkable polyester films have room for improvement in finish property compared to other materials, and the inventors of the present invention have conducted repeated studies as manufacturers of heat-shrinkable polyester films (for example, Patent Literature 1).

Further, Patent Literature 2 discloses a technique capable of improving a sink mark in a case where the film is shrunk on a container having a fixed point such as a square container, regarding shrinkage finish property when used as a label. Patent Literature 2 stipulates a diethylene glycol content of 1 to 20 mol%, and describes that an effect of suppressing the skirt ratio is improved by containing 3 mol% or more. Furthermore, Patent Literature 2 also describes that the skirt ratio can be suppressed in a case where the maximum stress generated by immersion in hot water at 90°C for 10 seconds is 6 N or less.

Meanwhile, in recent environmental measures, there exists a method of using a raw material recycled from PET bottles for a heat-shrinkable polyester film in order to reduce load on the environment (for example, Patent Literature 3). In Patent Literature 2, since it is necessary to limit the raw material composition for suppression of the skirt ratio, it has been difficult to increase a content ratio of the recycled material. Further, the skirt ratio of the film described in Examples of Patent Literature 2 is in a range of 10 to 13%, and the outer appearance after shrinkage was not sufficient.

CITATION LIST

PATENT LITERATURE

Patent Literature 1: JP 2011-94159 A
Patent Literature 2: Japanese Patent No. 5971897
Patent Literature 3: Japanese Patent No. 6802535

NON-PATENT LITERATURE

Non-Patent Literature 1: F. J. Balta Calleja; M. C. Garcia Gutierrez; D. R. Rueda; S. Piccarolo. Structure development in poly (ethylene terephthalate) quenched from the melt at high cooling rates: X-ray scattering and microhardness study. Polymer. 2000, vol. 41, p. 4143-4148. Non-Patent Literature 2: Atsushi Taniguchi; Miko Cakmak. The suppression of strain induced crystallization in PET through sub-micron $TiO_2$ particle incorporation. Polymer. 2004, vol. 45, p. 6647-6654.

SUMMARY OF INVENTION

TECHNICAL PROBLEM

In view of the above problems, an object of the present invention is to provide a heat-shrinkable polyester film having improved shrinkage finish property without limiting a raw material composition.

MEANS FOR SOLVING PROBLEMS

The present invention consists of the following configurations.

1. A heat-shrinkable polyester film comprising an ethylene terephthalate unit as a main constituent component, and satisfying the following requirements (1) to (4):

(1) a skirt ratio measured after the film is shrunk by 10% in a main shrinkage direction in hot air at 90°C and then heat-treated for one minute while being fixed in the 10% shrunk state is 1% or more and 8% or less;
(2) a maximum heat shrinkage stress in the main shrinkage direction is 1 MPa or more and 10 MPa or less, as measured while the film is heat-treated in hot air at 90°C for one minute in a state fixed at a 10% shrinkage after being shrunk by 10% in the main shrinkage direction in hot air at 90°C;
(3) a shrinkage rate when the film is immersed in hot water at 80°C for 10 seconds is 20% or more and 72% or less in the main shrinkage direction; and
(4) an average refractive index of the film is 1.57 or more and 1.585 or less.

2. The heat-shrinkable polyester film according to 1., wherein a storage elastic modulus at 90°C in a direction orthogonal to the main shrinkage direction of the film is 8 MPa or more and 100 MPa or less.
3. The heat-shrinkable polyester film according to 1. or 2., wherein a shrinkage rate when the film is immersed in hot water at 80°C for 10 seconds is -10% or more and 10% or less in a direction orthogonal to the main shrinkage direction.
4. The heat-shrinkable polyester film according to any one of 1. to 3., wherein the film contains 1 mol% or more and 30 mol% or less of one or more monomer components selected from the group consisting of isophthalic acid, neopentyl glycol, 1,4-cyclohexanedimethanol, 1,4-butanediol, and diethylene glycol as constituent components of polyester constituting the film.
5. The heat-shrinkable polyester film according to any one of 1. to 4., wherein the film contains a mechanically recycled and/or chemically recycled polyester raw material as a raw material constituting the film.
6. A heat-shrinkable label using the heat-shrinkable polyester film according to any one of 1. to 5. for at least a part thereof.
7. A package using the heat-shrinkable polyester film according to any one of 1. to 5.
8. A package using the label according to 6.

ADVANTAGEOUS EFFECTS OF INVENTION

According to the present invention, a heat-shrinkable polyester film having improved shrinkage finish property can be provided without limiting a raw material composition.

BRIEF DESCRIPTION OF DRAWINGS

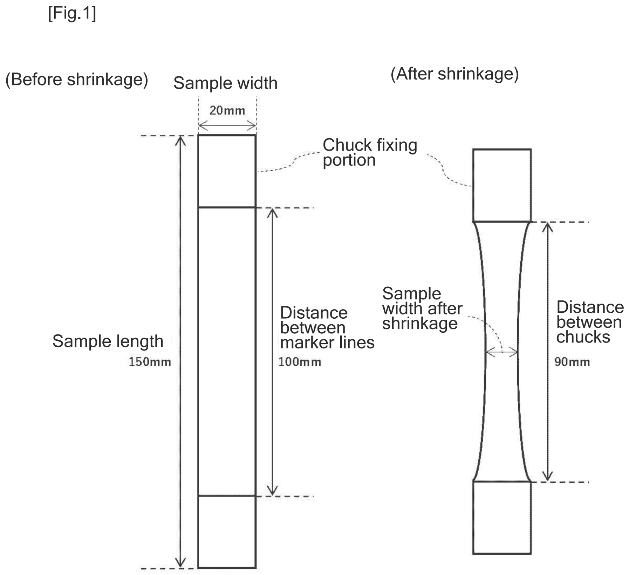

[Fig. 1] Schematic diagram of a sample when measuring shrinkage stress after 10% shrinkage and skirt ratio after 10% shrinkage.

DESCRIPTION OF EMBODIMENTS

A heat-shrinkable polyester film of the present invention will be described below.

[1] Characteristics of heat-shrinkable polyester film

Next, characteristics of the heat-shrinkable polyester film of the present invention will be described.

[1-1] Skirt ratio after 10% shrinkage

In the heat-shrinkable polyester film of the present invention, a skirt ratio (hereinafter, may be simply referred to as skirt ratio) measured after the heat-shrinkable polyester film is shrunk by 10% in the main shrinkage direction in hot air at 90°C, fixed at that shrinkage and heat-treated for one minute, needs to be 1% or more and 8% or less. In a case where the skirt ratio is more than 8%, a sink mark is enlarged after the heat-shrinkable film covers an object and is shrunk, and it is not preferable.

Meanwhile, although a smaller skirt ratio is better according to the gist of the present invention, if the skirt ratio is less than 1%, a shrinkage rate at 80°C in the main shrinkage direction tends to be less than 20%, and it is not preferable.
The skirt ratio is more preferably 1.5% or more and 7.5% or less, and even more preferably 2% or more and 7% or less. That is, the skirt ratio is 1 to 8%, more preferably 1.5 to 7.5%, and even more preferably 2 to 7%.

[1-2] Maximum heat shrinkage stress at 90°C after 10% shrinkage

In the heat-shrinkable polyester film of the present invention, the maximum heat shrinkage stress (hereinafter, may be simply referred to as heat shrinkage stress) in the main shrinkage direction needs to be 1 MPa or more and 10 MPa or less when, after the heat-shrinkable polyester film is shrunk by 10% in the main shrinkage direction in hot air at 90°C, the film is heated in hot air at 90°C with the length in the shrinkage direction fixed, and the maximum heat shrinkage stress in the main shrinkage direction is measured. In a case where the heat shrinkage stress is more than 10 MPa, the skirt ratio tends to be more than 8%, and it is not preferable. Meanwhile, although a smaller heat shrinkage stress allows the skirt ratio to be more preferably reduced according to the gist of the present invention, in a case where the heat shrinkage stress is less than 1 MPa, the shrinkage rate in hot water at 80°C in the main shrinkage direction as described below tends to be less than 20%, and it is not preferable.
A relationship between the heat shrinkage stress and the skirt ratio will be described on the assumption that the heat-shrinkable film is used as a bottle label.
A bottle label is produced by forming a heat-shrinkable film into an annular shape, and has a circumferential length having an allowance of about 10% relative to the bottle diameter on the assumption that a to-be-covered bottle is covered by the bottle label, in general. That is, in a case where the label is shrunk, the label is firstly shrunk so as to eliminate a space (10% allowance of the circumferential length) between the bottle and the label, and thereafter, the label is continuously shrunk in a state where the label adheres to the bottle until the end of heating. That the film is shrunk in a state where the film adheres to the bottle means that both end portions of the film in the main shrinkage direction are fixed and the film is shrunk. This is the same action as an action of generating a tensile force in the main shrinkage direction. In general, in a case where a tensile force acts on a film, stress is generated, and strain is simultaneously generated also in the direction orthogonal to the tensile force due to the Poisson effect. In a case where the label is shrunk, the tensile force corresponds to the heat shrinkage stress, and thus, the greater the heat shrinkage stress, the greater the strain in the orthogonal direction, that is, the greater the skirt ratio.
The heat shrinkage stress is more preferably 1.5 MPa or more and 9.5 MPa or less, and even more preferably 2 MPa or more and 9 MPa or less. That is, the heat shrinkage stress is 1 to 10 MPa, more preferably 1.5 to 9.5 MPa, and even more preferably 2 to 9 MPa.

[1-3] Heat shrinkage rate at 80°C in main shrinkage direction

The heat shrinkage rate of the heat-shrinkable polyester film of the present invention in the film main shrinkage direction as calculated from lengths before and after shrinkage according to the following Formula 1 after the heat-shrinkable polyester film is immersed in hot water at 80°C in a non-loaded state for 10 seconds, and, immediately after that, is immersed in water at 25°C±0.5°C for 10 seconds, needs to be 20% or more and 72% or less.

Heat shrinkage rate = {(length before shrinkage-length after shrinkage)/length before shrinkage} × 100 (%)    Formula 1

In a case where the heat shrinkage rate at 80°C in the main shrinkage direction is more than 72%, the skirt ratio tends to be more than 8%, and it is not preferable. The reason is the same as the reason based on the Poisson effect as described in [1-2] Maximum heat shrinkage stress at 90°C after 10% shrinkage. Meanwhile, in a case where the heat shrinkage rate at 80°C in the main shrinkage direction is less than 20%, when the heat-shrinkable polyester film is applied to a bottle label or used as a film for packaging boxed meals, wrinkles or the like may be generated after heat shrinkage, and it is not preferable. The heat shrinkage rate at 80°C in the main shrinkage direction is more preferably 20% or more and 70% or less, and even more preferably 20% or more and 68% or less. That is, the heat shrinkage rate at 80°C in the main shrinkage direction is 20 to 72%, more preferably 20 to 70%, and even more preferably 20 to 68%.

[1-4] Average refractive index

The heat-shrinkable polyester film of the present invention needs to have an average refractive index of 1.57 or more and 1.585 or less.
The inventors of the present invention have found that the average refractive index represents the stiffness of the film, and acts as a counteracting force with respect to the Poisson effect generated when a film which serves as a label is heated and shrunk as described in [1-2] Maximum heat shrinkage stress at 90°C after 10% shrinkage. Therefore, in a case where the average refractive index is less than 1.57, the counteracting force yields to strain stress in the direction orthogonal to the main shrinkage direction, and, as a result, the skirt ratio is considered to be more than 8%.

Meanwhile, the average refractive index of more than 1.585 is not preferable since there is a concern that the heat shrinkage rate at 80°C in the main shrinkage direction tends to be less than 20% and the heat shrinkage stress tends to be more than 10 MPa.

The average refractive index is more preferably 1.5705 or more and 1.5845 or less and even more preferably 1.571 or more and 1.584 or less. That is, the average refractive index is 1.57 to 1.585, more preferably 1.5705 to 1.5845, and even more preferably 1.571 to 1.584.

[1-5] Storage elastic modulus at 90°C in a direction orthogonal to the main shrinkage direction

In the heat-shrinkable polyester film of the present invention, a storage elastic modulus at 90°C (hereinafter, may be simply referred to as storage elastic modulus) is preferably 8 MPa or more and 100 MPa or less. In a case where the storage elastic modulus is less than 8 MPa, the skirt ratio tends to be more than 8%, and it is not preferable.

It is considered that the storage elastic modulus acts as a counteracting force with respect to the Poisson effect generated when a film which serves as a label is heated and shrunk as described in [1-2] Maximum heat shrinkage stress at 90°C after 10% shrinkage. Therefore, in a case where the storage elastic modulus is less than 8 MPa, the counteracting force yields to strain stress in the direction orthogonal to the main shrinkage direction, and, as a result, the skirt ratio is considered to be more than 8%. Although the larger storage elastic modulus allows the skirt ratio to be more preferably reduced, in a case where the storage elastic modulus is 100 MPa or more, the heat shrinkage rate at 80°C in the main shrinkage direction tends to be less than 20%, and it is not preferable.

The storage elastic modulus is more preferably 9 MPa or more and 90 MPa or less and even more preferably 10 MPa or more and 80 MPa or less. That is, the storage elastic modulus is 8 to 100 MPa, more preferably 9 to 90 MPa, and even more preferably 10 to 80 MPa.

[1-6] Shrinkage rate at 80°C in a direction orthogonal to the main shrinkage direction

The heat shrinkage rate of the heat-shrinkable polyester film of the present invention in the direction orthogonal to the main shrinkage direction of the film as calculated from lengths before and after shrinkage according to the above-described Formula 1 after the heat-shrinkable polyester film is immersed in hot water at 80°C in a non-loaded state for 10 seconds, and, immediately after that, is immersed in water at 25°C±0.5°C for 10 seconds, is preferably -10% or more and 10% or less.

In a case where the heat shrinkage rate at 80°C in the orthogonal direction is more than 10%, the skirt ratio tends to be more than 8%, and it is not preferable. Meanwhile, in a case where the heat shrinkage rate at 80°C in the orthogonal direction is less than -10%, it means that the film extends in the orthogonal direction during heat shrinkage, and the film is likely to wrinkle at the time of shrinkage finishing, and it is not preferable.

The heat shrinkage rate at 80°C in the orthogonal direction is more preferably -10% or more and 10% or less, and even more preferably -9% or more and 9% or less. That is, the heat shrinkage rate at 80°C in the orthogonal direction is -10 to 10% and more preferably -9 to 9%.

[1-7] Reversible heat capacity difference

In the heat-shrinkable polyester film of the present invention, a reversible heat capacity difference between before and after a glass transition temperature is preferably 0.2 J/g·K or more and 0.3 J/g·K or less.

That the reversible heat capacity difference is 0.3 J/g·K or more means that the film which has been completed (through stretching) has a large mobile amorphous content, so that the average refractive index tends to be less than 1.57, and the skirt ratio tends to be more than 8%, and it is not preferable. Meanwhile, in a case where the reversible heat capacity difference is 0.2 J/g·K or less, the heat shrinkage rate at 80°C in the main shrinkage direction tends to be less than 20%, and it is not preferable.

The reversible heat capacity difference is more preferably 0.21 J/g·K or more and 0.3 J/g·K or less, and even more preferably 0.22 J/g·K or more and 0.29 J/g·K or less. That is, the reversible heat capacity difference is preferably 0.2 to 0.3 J/g·K, more preferably 0.21 to 0.3 J/g·K, and even more preferably 0.22 to 0.29 J/g·K.

[1-8] Glass transition temperature

The heat-shrinkable polyester film of the present invention preferably has a glass transition temperature of 50°C or higher and 100°C or lower.

In a case where the glass transition temperature is lower than 50°C, heat resistance as a heat-shrinkable label is poor, and furthermore, the storage elastic modulus at 90°C tends to be less than 8 MPa, so that the skirt ratio tends to be more than 8%, and it is not preferable. Meanwhile, in a case where the glass transition temperature is higher than 100°C, the heat shrinkage rate at 80°C in the main shrinkage direction tends to be less than 20%, and it is not preferable.

The glass transition temperature is more preferably 55°C or higher and 95°C or lower, and even more preferably 60°C or higher and 90°C or lower. That is, the glass transition temperature is preferably 50 to 100°C, more preferably 55 to 95°C, and even more preferably 60 to 90°C.

[1-9] Thickness

The heat-shrinkable polyester film of the present invention preferably has a thickness of 4 μm or more and 100 μm or less.

The smaller the thickness is, the more efficiently a melted resin is cooled in a casting step in film formation (described below). Therefore, the storage elastic modulus is enhanced and the skirt ratio is easily reduced, and it is preferable. However, in a case where the thickness is less than 4 μm, the film becomes extremely thin, so that handling becomes difficult in, for example, a step of forming a label (handleability becomes poor), and it is not preferable. Meanwhile, in a case where the thickness is more than 100 μm, melted-resin cooling efficiency is insufficient in a casting step in film formation, and the storage elastic modulus at 90°C tends to be less than 8 MPa, and the skirt ratio tends to be more than 8%, and it is not preferable.

The thickness is more preferably 8 μm or more and 96 μm or less, and even more preferably 12 μm or more and 92 μm or less. That is, the thickness is preferably 4 to 100 μm, more preferably 8 to 96 μm, and even more preferably 12 to 92 μm.

[2] Method for producing heat-shrinkable polyester film

[2-1] Polyester raw material

A polyester raw material used for the heat-shrinkable polyester film of the present invention contains an ethylene terephthalate unit as a main constituent component. The "main" means that the content is 50 mol% or more, and the content of the ethylene terephthalate unit is preferably 50 mol% or more, more preferably 55 mol% or more, and even more preferably 60 mol% or more with respect to 100 mol% of the polyester-constituting unit.

Examples of a dicarboxylic acid component, other than terephthalic acid, which constitutes the polyester of the present invention include aromatic dicarboxylic acids such as isophthalic acid, orthophthalic acid, and 2,6-naphthalenedicarboxylic acid, aliphatic dicarboxylic acids such as adipic acid, azelaic acid, sebacic acid, and decane dicarboxylic acid, and alicyclic dicarboxylic acids such as 1,4-cyclohexanedicarboxylic acid. Among them, isophthalic acid and orthophthalic acid are preferable.

In a case where an aliphatic dicarboxylic acid (for example, adipic acid, sebacic acid, decane dicarboxylic acid, or the like) is contained in the polyester, the content thereof is preferably less than 3 mol% (with respect to 100 mol% of the dicarboxylic acid component).

No polyvalent carboxylic acid having tri- or more valence (for example, trimellitic acid, pyromellitic acid, and anhydrides thereof) is preferably contained in the polyester. In a heat-shrinkable polyester film obtained by using polyester containing the polyvalent carboxylic acid, the required shrinkage rate is unlikely to be achieved.

Examples of a diol component, other than ethylene glycol, which constitutes the polyester of the present invention include alicyclic diols such as neopentyl glycol and 1,4-cyclohexanedimethanol, aliphatic diols such as 1,4-butanediol, diethylene glycol, 1,3-propanediol, and hexanediol, and aromatic diols such as bisphenol A. Among them, neopentyl glycol, 1,4-cyclohexanedimethanol, 1,4-butanediol, and diethylene glycol are preferable.

The content of the dicarboxylic acid component other than terephthalic acid and/or the diol component other than ethylene glycol is preferably 1 mol% or more and 30 mol% or less. Among the above-described constituent components, any one or more of isophthalic acid, neopentyl glycol, 1,4-cyclohexanedimethanol, 1,4-butanediol, and diethylene glycol is more preferably contained.

A polyester elastomer may be used for the film of the present invention in addition to the polyester raw material having the above-described constituent components. Examples of the polyester elastomer include a copolymer of ε caprolactone and 1,4-butanediol, and polytetramethylene glycol.

Furthermore, a recycled polyester material obtained by recovering waste such as used PET bottles is also preferably used in addition to the above-described polyester raw material from the viewpoint of environmental friendliness that is the gist of the present invention.

Examples of a polyester resin obtained by recycling PET bottles include a polyester resin (hereinafter, may be referred to as mechanically recycled polyester resin) obtained by a physical regenerative method in which used PET bottles recovered from the market and society are sorted, pulverized, and washed to sufficiently remove stain and foreign matter on the surfaces, the obtained product is then exposed to high temperature and contaminants and the like remaining in the resin are washed off to a high degree, and the obtained product is then repelletized, and a polyester resin (hereinafter, may be referred to as chemically recycled polyester resin) obtained by decomposing a polyester resin contained in used packaging-containers to a monomer level, then removing contaminants and the like, and repolymerizing the obtained product.

The recycled material which can be preferably used for the present invention is mainly a recycled product of containers in which polyethylene terephthalate is mainly contained. For example, recycled products of containers for beverages such as tea beverages and soft drinks can be preferably used, and may be oriented as appropriate, and are preferably colorless, but may slightly contain a coloring component.

A content of the recycled material is preferably 5 weight% or more and 100 weight% or less in a range in which the content of the dicarboxylic acid component other than terephthalic acid and/or the diol component other than ethylene glycol as described above is 1 mol% or more and 30 mol% or less. In a case where the content of the recycled material is less than 5 weight%, a proportion of the recycled material contained in the raw material used for film formation is very small, and an effect of reducing load on environment is small. The content of the recycled material is more preferably 6 weight% or more and even more preferably 7 weight% or more. The upper limit of the content of the material used for film formation is 100 weight%. The more the content of the recycled material is, the more effectively a load on the environment is reduced, and it is preferable. However, it is also preferable that a lubricant for allowing the film to exhibit slipperiness is used as a masterbatch, and a raw material other than the recycled material is used in order to adjust a shrinkage rate, and therefore, it is practically sufficient that the upper limit of the recycled material is 95 weight%.

The material which is recycled from the market and society and which preferably includes usable PET bottles is polyester produced and molded in a standard polymerization method and a solid phase polymerization method, preferably contains polyethylene terephthalate mainly, and can include another polyester component and copolymerization component without problem. A compound of a metal such as antimony, germanium, or titanium as a catalyst, a phosphorus compound as a stabilizer, or the like may be contained. In general, germanium is often used as a catalyst for polyester of PET bottles. When a film is formed by using a PET-bottle-recycled material, one ppm or more of germanium may be contained in the film. However, this is just a content of the catalyst, and the content of germanium is generally 100 ppm or less at most, and is usually 50 ppm or less.

To the resin forming the heat-shrinkable polyester film of the present invention, various additives such as waxes, an antioxidant, an antistatic agent, a crystal nucleating agent, a viscosity reducing agent, a heat stabilizer, a pigment for coloring, an anti-coloring agent, and an ultraviolet absorber can be added as necessary.

To the resin forming the heat-shrinkable polyester film of the present invention, fine particles are preferably added as a lubricant for improving workability (slipperiness) of the film. As the fine particles, any fine particles can be selected, and examples of the fine particles include inorganic fine particles such as silica, alumina, titanium dioxide, calcium carbonate, kaolin, and barium sulfate, and organic fine particles such as acrylic resin particles, melamine resin particles, silicone resin particles, and cross-linked polystyrene particles. The average particle diameter of the fine particles is preferably in a range of 0.05 to 3.0 $\mu$m. The average particle diameter of the fine particles represents a value measured by a Coulter counter. In a case where the particle diameter is less than 0.05 $\mu$m, slipperiness required for handling may become unsatisfactory.

Meanwhile, in a case where the particle diameter is more than 3.0 $\mu$m, the particles may be excessively agglomerated and bulky and may become foreign matter, and the outer appearance may extremely deteriorate.

The particle diameter is more preferably 0.06 $\mu$m or more and 2.99 $\mu$m or less and even more preferably 0.07 $\mu$m or more and 2.98 $\mu$m or less. That is, the average particle diameter is preferably 0.05 to 3.0 $\mu$m, more preferably 0.06 to 2.99 $\mu$m, and even more preferably 0.07 to 2.98 $\mu$m.

In a method for blending the above-described particles in the resin forming the heat-shrinkable polyester film of the present invention, for example, the particles may be added at any stage in production of the polyester-based resin. However, preferably, at the stage of esterification, or at the stage after the end of transesterification and before the start of polycondensation, the particles are added as a slurry in which the particles are dispersed in ethylene glycol or the like, and polycondensation is progressed. Furthermore, for example, a method in which a slurry in which the particles are dispersed in ethylene glycol, water, or the like, and a polyester-based resin raw material are blended by using a kneading extruder having a vent, or a method in which dried particles and a polyester-based resin raw material are blended by using a kneading extruder, is also preferably used.

The method for blending the above-described fine particles in the above-described polyester raw material is not particularly limited, and, for example, the fine particles may be added at any stage in production of the polyester-based resin. However, preferably, at the stage of esterification, or at the stage after the end of transesterification and before the start of polycondensation, the fine particles are added as a slurry in which the fine particles are dispersed in ethylene glycol or the like, and polycondensation is progressed. Furthermore, for example, a method in which a slurry in which the fine particles are dispersed in ethylene glycol, water, or the like, and a polyester-based resin raw material are blended by using a kneading extruder having a vent, or a method in which dried fine particles and a polyester-based resin raw material are blended by using a kneading extruder, may also be used.

[2-2] Film formation method for heat-shrinkable polyester film

The heat-shrinkable polyester film of the present invention can be obtained by melt-extruding the above-described polyester raw material by an extruder to form an unstretched film and stretching the unstretched film by a predetermined method described below. In the present invention, transverse uniaxial stretching, or sequential biaxial stretching in which transverse stretching is conducted after longitudinal stretching will be described as an example of a standard shrinkable-film production method. However, the method may be longitudinal uniaxial stretching, or sequential biaxial stretching in which longitudinal stretching is conducted after transverse stretching, or may be simultaneous biaxial stretching in which stretching is simultaneously conducted in the longitudinal and the transverse directions. The heat-shrinkable polyester film of the present invention may have a monolayer structure, or may have a multilayer structure formed of two or more layers. In the case of a multilayer structure, the structure preferably has five or less layers.

[2-2-1] Extrusion condition

When the raw material resin is melt-extruded, the polyester raw material is preferably dried by using a dryer such as a hopper dryer or a paddle dryer, or a vacuum dryer. After the polyester raw material is thus dried, the polyester raw material is melted and extruded into a film-like shape by using an extruder. A melting temperature for extruding the polyester raw material is preferably 200°C or higher and 300°C or lower.

As described below, in the present invention, it is important to enhance melted-resin cooling efficiency in a cooling step after the extrusion step. Therefore, in a case where the extrusion temperature is higher than 300°C, the cooling after the extrusion becomes insufficient, and the skirt ratio may tend to be more than 8%. Furthermore, in a case where the extrusion temperature is higher than 300°C, pyrolysis of the resin is excessively promoted, and foreign matter may adhere to the film or breakage may be caused during a film forming step. Meanwhile, according to the gist of the present invention, the lower the extrusion temperature is, the more the skirt ratio can be suppressed, which is preferable. However, in a case where the extrusion temperature is lower than 200°C, a pressure for extruding the molten resin becomes excessively high, and a filter in the melt line is likely to be deformed, and it is not preferable. The extrusion temperature is more preferably 205°C or higher and 295°C or lower, and even more preferably 210°C or higher and 290°C or lower. That is, the extrusion temperature is preferably 200 to 300°C, more preferably 205 to 295°C, and even more preferably 210 to 290°C.

For the extrusion, any existing method such as a T-die method and a tubular method can be adopted.

[2-2-2] Condition for forming unstretched film (quenching of melted resin)

An unstretched film can be obtained by quenching a sheet-shaped melted resin after melt-extrusion of the raw material resin. As a method for quenching the melted resin, a method in which the melted resin is cast onto a chill roll from a die, and quenched and solidified to obtain a substantially unoriented resin sheet (hereinafter, may be referred to as unstretched film) can be preferably adopted. The inventors of the present invention have found that a finish property of the heat-shrinkable polyester film having been subjected to a stretching step described below is improved under this melted-resin quenching condition. Specifically, it has been found that, under the quenching condition, the average refractive index of the film is enhanced, and the storage elastic modulus is also enhanced, and, as a result, a small skirt ratio can be maintained. The mechanism will be described below in detail.

It is known that, when polyester is cooled after being melted, the molecular structure is changed according to the cooling rate. For example, in Non-Patent Literature 1, FIG. 4 shows a relationship between a degree of crystallinity and Vickers hardness in the case of a cooling rate being changed. It is indicated that, when the degree of crystallinity has reached a certain value (about 5%) by increasing the cooling rate, the degree of crystallinity does not become less than the certain value, whereas the Vickers hardness is further reduced. The authors of Non-Patent Literature 1 indicate that a relatively orderly structure that can become a precursor of a crystal (although it is not exhibited in the degree of crystallinity) locally exists in a sample having high Vickers hardness in this region. Furthermore, apart from the description in Non-Patent Literature 1, the molecular structure of polyester includes a rigid amorphous phase and a mobile amorphous phase in addition to a crystal, and the former is understood to exist as, for example, a precursor of a crystal or an amorphous phase between crystals. By considering this, the inventors of the present invention have assumed that, in a case where the cooling rate from a melted state is increased, a lot of mobile amorphous phases are generated in an unstretched film.

Next, change of the molecular structure in the step of stretching the unstretched film which is thus produced will be described. According to Non-Patent Literature 2, a molecular structure obtained when a polyester film to which titanium oxide as fine particles is added is stretched, is examined. FIG. 9 in Non-Patent Literature 2 shows a relationship between a stretching ratio and a degree of crystallinity for each blended amount of titanium oxide, and indicates that the more the blended amount of titanium oxide is, the more the crystallization is suppressed as the stretching ratio increases. The authors indicate that this is because orientation of molecular chains by stretching is promoted in the case of a plain state (titanium oxide is not blended), whereas, in the case of fine particles such as titanium oxide being blended, existence of the fine particles hinders formation of orientation, so that a degree of crystallinity becomes low. That is, it is suggested that, if some factor, which is not limited to fine particles, hinders formation of orientation during stretching, the degree of crystallinity and an amount of a rigid amorphous phase are reduced in the film completed after the stretching.

Thus, the inventors of the present invention have examined in detail a molecular structure which counteracts the Poisson effect when the heat-shrinkable polyester film is shrunk in the main shrinkage direction while maintaining a shrinkage rate required for the heat-shrinkable polyester film, that is, which can enhance the storage elastic modulus in the direction orthogonal to the main shrinkage direction, on the basis of the above-described mechanism. The inventors of the present invention have considered that existence of crystals and a rigid amorphous phase generated in the cooling step during formation of an unstretched film hinders formation of orientation during stretching. Consequently, the inventors of the present invention have considered that, in a case where generation of crystals and a rigid amorphous phase can be inhibited by increasing a cooling rate, formation of orientation can be promoted and a larger amount of crystals and rigid amorphous phases can be generated after stretching, and required characteristics can be obtained without limiting a kind of a raw material. As a result, the average refractive index of the film can be increased and the storage elastic modulus can be increased, and consequently, the skirt ratio is successfully reduced, and the present invention is thus achieved.

As a cooling rate for cooling the melted resin, an average (hereinafter, may be simply referred to as average cooling rate) of cooling rates from a time immediately after a melted resin is discharged (extruded-resin temperature) to departure of the melted resin from the chill roll is preferably 40°C/second or more and 300°C/second or less.

In a case where the average cooling rate is less than 40°C/second, generation of the mobile amorphous phase in the unstretched film is small, generation of crystals·the·rigid amorphous phase after stretching is poor, and the skirt ratio tends to be more than 8%, and it is not preferable. Meanwhile, although the higher the cooling rate is, the smaller the skirt ratio can be made and this is preferable according to the gist of the present invention, a chill roll temperature needs to be decreased or an air sending speed needs to be enhanced in order to increase the cooling rate, and, according thereto, a harmful effect that, for example, dew condensation is caused on the chill roll, and catenary of the melted resin is likely to be disturbed, is likely to be caused (described below in detail). Even when the upper limit of the average cooling rate is 200°C/second, it is practically sufficient.

In order to increase the average cooling rate up to 40°C/second or more, it is effective to shorten a distance between a melted resin outlet and a chill roll, to decrease a chill roll temperature, to send air to the melted resin, or to immerse the chill roll in a water tank together with the molten resin being in contact with it. These will be described below in detail.

[2-2-2-1] Distance between melted resin outlet and chill roll

In order to enhance melted-resin cooling efficiency, it is effective to shorten a distance between a melted resin outlet and a chill roll, and the distance is preferably 10 mm or more and 150 mm or less.

In a case where the distance is more than 150 mm, there is a concern that the melted-resin cooling efficiency becomes insufficient, and a predetermined film characteristic such as the skirt ratio cannot be satisfied. Meanwhile, although the smaller the distance between the melted resin outlet and the chill roll is, the higher the cooling efficiency is, and it is preferable, there is a concern that the outlet and the chill roll come into contact with each other and the equipment is broken, and it is not preferable.

The distance between the melted resin outlet and the chill roll is more preferably 12 mm or more and 148 mm or less, and even more preferably 14 mm or more and 146 mm or less. That is, the distance between the melted resin outlet and the chill roll is preferably 10 to 150 mm, more preferably 12 to 148 mm, and even more preferably 14 to 146 mm.

[2-2-2-2] Chill roll temperature

The lower the chill roll temperature is, the higher the melted-resin cooling efficiency is, so that the skirt ratio is likely to be 8% or less, and it is preferable. The melted-resin cooling efficiency is determined in coordination with the other factors ([2-2-2-1] Distance between melted resin outlet and chill roll as described above, [2-2-2-3] Air sending to melted resin as described below, and the like). Therefore, although it is difficult to unconditionally determine the upper limit of the chill roll temperature, the upper limit thereof is, for example, preferably 30°C or lower. Meanwhile, the lower limit of the chill roll temperature is preferably a dew point in an unstretched-film forming chamber+1°C or higher. The lower the chill roll temperature is, the higher the melted-resin cooling efficiency is, and it is preferable. However, in a case where the chill roll temperature is lower than the dew point+1°C, dew condensation is caused on the chill roll, and the unstretched film is likely to be wound around the chill roll.

In order to decrease the dew point in the chamber, it is effective to decrease the temperature and the humidity, and, for example, it is preferable to control the dew point by using an air-conditioning dehumidifier. The dew point is preferably 5°C or higher and 25°C or lower. In a case where the dew point is higher than 25°C, dew condensation is likely to be caused on the chill roll, and it is not preferable. The dew point of lower than 5°C is preferable from the viewpoint of decreasing the chill roll temperature. However, a large amount of electric power is continuously used in a case where an air-conditioning dehumidifier is used as described above, and it is not preferable.

The dew point in the chamber depends on balance between temperature and humidity. Therefore, although preferable ranges of the temperature and the humidity cannot be unconditionally determined, for example, the temperature in the chamber is preferably 5°C or higher and 25°C or lower, and the humidity is preferably 25% or more and 75% or less. In a case where the temperature is higher than 25°C or the humidity is more than 75%, the dew point tends to be higher than 25°C, and it is not preferable. In a case where the temperature is lower than 5°C or the humidity is less than 25%, a lot of electric power is continuously used for the air-conditioning dehumidifier, and it is not preferable.

[2-2-2-3] Air sending to melted resin

In the present invention, it is effective to send air to the melted resin in order to enhance cooling efficiency. Particularly, by sending air to a surface opposite to a surface in contact with the chill roll, difference in temperature between the front side and the rear side of the melted resin (unstretched film) is reduced, and the cooling efficiency can be further enhanced, and it is preferable. As an air sending method, a method using a blower such as a multi-duct can be used. A spot to which air is sent is preferably a spot following a spot at which the melted resin lands on the chill roll. In a case where air is sent to the melted resin which has yet to land on the chill roll, catenary obtained until the melted resin reaches the chill roll may be disturbed by the air, so that the width of the unstretched resin film may be changed or a state of adhesion between the melted resin and the chill roll may be changed, and it is not preferable. The air sending speed is preferably 2 m/second or more and 20 m/second or less.

In a case where the air sending speed is less than 2 m/second, the melted-resin cooling efficiency becomes insufficient. Meanwhile, in a case where the air sending speed is more than 20 m/second, even if the spot to which air is sent is appropriate, the catenary of the melted resin is likely to be disturbed, and it is not preferable.

[2-2-3] Control of longitudinal stretching condition

In production of the heat-shrinkable polyester film of the present invention, in a case where the longitudinal direction is not the main shrinkage direction, the stretching ratio in the longitudinal direction is preferably two times or less. The lower limit of the longitudinal stretching ratio is one time (non-stretched). In a case where the longitudinal stretching ratio is more than two times, the shrinkage rate at 80°C in the main shrinkage direction tends to be more than 10%, and it is not preferable. The upper limit of the longitudinal stretching ratio is more preferably 1.8 times or less, and even more preferably 1.6 times or less. The longitudinal stretching ratio is particularly preferably one time that is the lower limit.

In a case where the longitudinal stretching direction is the main shrinkage direction, the stretching ratio in the longitudinal direction is preferably 3 times or more and 5.8 times or less.

In a case where the stretching ratio in the longitudinal direction is less than 3 times, the heat shrinkage rate at 80°C in the main shrinkage direction is unlikely to be 20% or more. Meanwhile, in a case where the stretching ratio is more than 5.8 times, the heat shrinkage rate at 80°C in the main shrinkage direction and the heat shrinkage stress are more than values in the predetermined ranges, and the skirt ratio tends to be more than 8%, and it is not preferable.

In a case where the longitudinal direction is the main shrinkage direction, the stretching ratio is more preferably 3.2 times or more and 5.6 times or less, and even more preferably 3.4 times or more and 5.4 times or less. That is, in a case where the longitudinal direction is the main shrinkage direction, the stretching ratio is preferably 3 to 5.8 times, more preferably 3.2 to 5.6 times, and even more preferably 3.4 to 5.4 times.

In a case where stretching is performed in the longitudinal direction, a substantially unoriented film is preferably preheated to a temperature of Tg or higher and Tg+60°C or lower. The longitudinal stretching may be either single-stage stretching or multistage stretching such as two or more-stage stretching.

[2-2-4] Control of transverse stretching condition

In the present invention, in a case where the main shrinkage direction is the transverse direction, transverse stretching is preferably performed in a state where both end edges in the width direction are held by clips in a tenter such that the ratio is 3.5 times or more and 6 times or less at a temperature of Tg or higher and Tg+50°C or lower.

In a case where the temperature in the transverse stretching is Tg or lower, the heat shrinkage stress tends to be more than 10 MPa, and it is not preferable. Meanwhile, in a case where the temperature in the transverse stretching is higher than Tg+50°C, the shrinkage rate at 80°C in the main shrinkage direction tends to be less than 20%, and it is not preferable.

The temperature in the transverse stretching is more preferably Tg+2°C or higher and Tg+48°C or lower, and even more preferably Tg+4°C or higher and Tg+46°C or lower. That is, the temperature in the transverse stretching is preferably Tg to Tg+50°C, more preferably Tg+2°C to Tg+48°C, and even more preferably Tg+4°C to Tg+46°C.

In a case where the stretching ratio is less than 3.5 times, the shrinkage rate at 80°C in the main shrinkage direction tends to be less than 20%, and it is not preferable. Meanwhile, in a case where the stretching ratio is more than 6 times, the heat shrinkage stress tends to be more than 10 MPa, and it is not preferable.

The stretching ratio in the transverse direction is more preferably 3.6 times or more and 6.1 times or less, and even more preferably 3.7 times or more and 6.2 times or less. That is, the stretching ratio in the transverse direction is preferably 3.5 to 6 times, more preferably 3.6 to 6.1 times, and even more preferably 3.7 to 6.2 times.

In a case where the longitudinal direction is the main shrinkage direction, the stretching ratio in the transverse direction is preferably one time or more and 2.4 times or less.

In a case where the stretching ratio in the transverse direction is more than 2.4 times, the heat shrinkage rate at 80°C in the direction orthogonal to the main shrinkage direction tends to be more than 10%, and it is not preferable. The lower limit of the transverse stretching ratio is one time (non-stretched).

The temperature in the transverse stretching is preferably Tg or higher and Tg+80°C or lower.

In a case where the temperature in the transverse stretching is lower than Tg, the heat shrinkage rate at 80°C in the direction orthogonal to the main shrinkage direction tends to be more than 10%, and furthermore, there may be a disadvantage in film forming stability such as occurrence of breakage. Meanwhile, in a case where the temperature in the transverse stretching is higher than Tg+80°C, the shrinkage rate at 80°C in the main shrinkage direction (in this case, in the longitudinal direction) tends to be less than 20%, and it is not preferable.

The temperature in the transverse stretching is more preferably Tg+5°C or higher and Tg+75°C or lower, and even more preferably Tg+10°C or higher and Tg+70°C or lower. That is, the temperature in the transverse stretching is preferably Tg to Tg+80°C, more preferably Tg+5°C to Tg+75°C, and even more preferably Tg+10°C to Tg+70°C.

In a case where the longitudinal direction is the main shrinkage direction, the timing of the transverse stretching may be either a time before the longitudinal stretching or a time after the longitudinal stretching.

[2-2-5] Heat treatment·relaxing condition after stretching in shrinkage direction

The film having been stretched as described above may be subjected to heat treatment in a state where both end edges in the width direction are held by clips in a tenter, as necessary.

In the description herein, the heat treatment refers to heat treatment performed at a temperature of 60°C or higher and 120 or lower for one second or more and ten seconds or less.

By such heat treatment, the shrinkage rate at 80°C and the heat shrinkage stress can be adjusted, and thus, the heat treatment is preferably used. In a case where the temperature for the heat treatment is lower than 60°C, the above-described effect is not effectively exhibited by the heat treatment. Meanwhile, in a case where the temperature for the heat treatment is higher than 120°C, the heat shrinkage rate at 80°C in the main shrinkage direction tends to be less than 20%, and it is not preferable.

The longer the heat treatment time is, the more likely the effect is to be exhibited. However, in a case where the heat treatment time is excessively long, the equipment becomes huge. Therefore, the heat treatment time is preferably controlled to be one second or more and ten seconds or less. The heat treatment time is more preferably two seconds or more and nine seconds or less, and even more preferably three seconds or more and eight seconds or less. That is, the heat treatment time is preferably one to ten seconds, more preferably two to nine seconds, and even more preferably three to eight seconds.

In the heat treatment step, in order to adjust the shrinkage rate at 80°C and the heat shrinkage stress, relaxing in the width direction can also be performed by shortening a distance between clips for holding in a tenter. However, since there is a concern that the average refractive index and the storage elastic modulus which are technically important for the present invention are reduced by the relaxing, and the skirt ratio becomes more than 8%, the relaxation rate is preferably 5% or less.

[2-2-6] Surface treatment

In the heat-shrinkable polyester film of the present invention, one of the surface layers or both the surface layers may be subjected to surface treatment.

Examples of the surface treatment include corona treatment, plasma treatment, flame treatment, sand blasting treatment, and coating. These surface treatments are performed in order to, for example, improve adhesiveness and improve charging characteristics, and can be applied within the scope of the gist of the present invention. The timing when the surface treatment is performed may be either a time during film formation or a time after the end of film formation, and can be discretionarily selected.

[3] Label

The heat-shrinkable polyester film of the present invention is used for at least a part of the label of the present invention, and, needless to say, the heat-shrinkable polyester films of the present invention may form the label of the present invention by themselves, and, furthermore, the heat-shrinkable polyester film may be adhered to another film in the label. The length (circumferential length) of the label and the number of adhered portions may be discretionarily determined.

As another film constituting the label of the present invention, a conventionally known film having any length can be used. A material of the film may be any material, and examples of the material include polyester-based materials, polyolefin-based materials, and polyamide-based materials.

Examples of an adhesion method required for forming the label of the present invention include a method using center-sealing for which a solvent is used, heat-sealing, ultrasonic sealing, hot glue (hot melt), or cold glue. Among them, center-sealing for which a solvent is used, heat-sealing, or ultrasonic sealing is preferable. In the case of the center-sealing for which a solvent is used, the solvent can be, but is not necessarily limited to, 1,3-dioxolane, tetrahydrofuran, or the like.

Heat-sealing strength varies according to a temperature of a heat-seal bar (surface in contact with the film), pressure, and a sealing time, and is determined in combination of these conditions. For example, even if a heat-sealing temperature is made high, in a case where a sealing time is short, a temperature applied to the film in practice becomes low. In an example, the heat-sealing temperature is preferably 100°C or higher and 180°C or lower, more preferably 110°C or higher and 170°C or lower, and even more preferably 120°C or higher and 160°C or higher. That is, the heat-sealing temperature is preferably 100 to 180°C, more preferably 110 to 170°C, and even more preferably 120 to 160°C.

In a case where the heat-sealing temperature is lower than 100°C, the heat-sealing strength tends to be less than 20 N/15 mm. In a case where the heat-sealing temperature is higher than 180°C, although the heat-sealing strength is enhanced and it is preferable, the film tends to heat-shrink, the size of the label at a heat-sealed portion is changed, and outer appearance may deteriorate.

The heat-sealing pressure is preferably 0.05 MPa or more and 0.6 MPa or less, more preferably 0.1 MPa or more and 0.55 MPa or less, and even more preferably 0.15 MPa or more and 0.5 MPa or less. That is, the heat-sealing pressure is preferably 0.05 to 0.6 MPa, more preferably 0.1 to 0.55 MPa, and even more preferably 0.15 to 0.5 MPa.

In a case where the pressure is less than 0.05 MPa, a seal bar is unlikely to sufficiently transmit heat to the film, and the heat-sealing strength tends to be less than 20 N/15 mm. In a case where the pressure is more than 0.05 MPa, heat-sealing strength does not substantially change, but it is found that, if the pressure is more than 0.6 MPa, there is a concern that, for example, the film is broken, in a range of the examination made by the inventors of the present invention.

The heat-sealing time is preferably 0.1 seconds or more and 3 seconds or less, more preferably 0.2 seconds or more and 2.9 seconds or less, and even more preferably 0.3 seconds or more and 2.8 seconds or less. That is, the heat-sealing time is preferably 0.1 to 3 seconds, more preferably 0.2 to 2.9 seconds, and even more preferably 0.3 to 2.8 seconds.

In a case where the sealing time is less than 0.1 seconds, the heat-sealing strength tends to be less than 20 N/15 mm. In a case where the sealing time is more than 3 seconds, although the heat-sealing strength is enhanced and it is preferable, the sealing time of more than 3 seconds is contrary to enhancement of productivity that is the gist of the present invention, and it is not preferable.

An object to be packaged by the label of the present invention is not limited, and is, for example, a quadrangular or round plastic container or PET bottle.

This application claims priority to Japanese Patent Application No. 2023-110168 filed on July 4, 2023, the entire contents of which are incorporated herein for reference.

EXAMPLES

Next, the present invention will be specifically described by using examples and comparative examples. However, the present invention is not limited to these examples in any way, and modification can be made as appropriate without departing from the gist of the present invention.

<Method for evaluating heat-shrinkable polyester film>

[Thickness]

The thickness was measured at five points by using a micrometer (Millitron 1254D manufactured by Feinpruf), and the average value was obtained.

[Shrinkage stress at 90°C after 10% shrinkage]

A strip-shaped film sample having a length (sample length) of 150 mm in the main shrinkage direction and a length (sample width) of 20 mm in the orthogonal direction was cut out from the heat-shrinkable film, and marker lines were drawn such that the length in the main shrinkage direction was 100 mm. The skirt ratio was measured by using a TENSILON universal tester RTC-1210A (manufactured by ORIENTEC CORPORATION) having a heating furnace. The inside of the heating furnace was heated to 90°C in advance, and a distance between chucks for holding the film sample was 90 mm.
When the sample was attached to the chucks, air sending to the heating furnace was temporarily stopped, a door of the heating furnace was opened, and both end portions, each being 25 mm, of the sample that was 150 mm in the length direction were held and fixed between the chucks. After the sample was attached to the chucks, the door of the heating furnace was immediately closed, and air sending was restarted. A time point when the door of the heating furnace was closed and air sending was restarted was set as a shrinkage-stress measurement start point, and the maximum value of measured values of shrinkage stress between the shrinkage-stress measurement start point and a time at which 60 seconds passed after the start of the measurement was set as the maximum value of the shrinkage stress (maximum shrinkage stress (MPa)). FIG. 1 is a schematic diagram illustrating a sample before shrinkage.

[Skirt ratio after 10% shrinkage]

In the above-described [Shrinkage stress at 90°C after 10% shrinkage], immediately after the measurement of the shrinkage stress was completed, the sample was taken out from the heating furnace. The width of the narrowest portion of the sample having been taken out was measured, and the skirt ratio was calculated according to the following Formula 2. FIG. 1 is a schematic diagram illustrating the sample before shrinkage and the sample after shrinkage.

Skirt ratio = (sample width before shrinkage-sample width after shrinkage)/distance between chucks $\times$ 100 (%) = (20 - sample width after shrinkage)/90 $\times$ 100 (%)

Formula 2

[Heat shrinkage rate at 80°C]

The heat-shrinkable film was cut into a 10 cm$\times$10 cm square shape, and was immersed in hot water at a predetermined temperature$\pm$0.5°C in a non-loaded state for 10 seconds and heat-shrunk, thereafter immersed in water at 25°C$\pm$0.5°C for 10 seconds, and taken out from the water, the dimensions of the film in the longitudinal and transverse directions were measured, and a heat shrinkage rate in each direction was obtained according to the following Formula 1. The direction in which the heat shrinkage rate was larger was set as the main shrinkage direction.

Heat shrinkage rate={(length before shrinkage-length after shrinkage)/length before shrinkage} $\times$100 (%)

Formula 1

[Average refractive index]

A refractive index was measured in accordance with JIS K7105. The film which was cut out so as to have a width of 2 cm and a length of 3 cm, was used as a sample. At this time, the sample was cut out and prepared such that the longitudinal direction of the sample was parallel to the length direction of the film. For the sample, a refractive index (Ny) in the film width direction was measured by using an Abbe refractometer 4T manufactured by ATAGO CO., LTD. A solvent used for the measurement was diiodomethane, and the measurement was performed under the measurement condition of 23°C and 60RH%. As the number of measurement times, n=3 was satisfied.

[Storage elastic modulus]

A sample which was 15 mm in the main shrinkage direction and 4 mm in the direction orthogonal to the main shrinkage direction was cut out, and measured by using RSA-G2 manufactured by TA Instruments Japan Inc. In a state where the distance between chucks was 10 mm, a load was 10 g, and a frequency was 10 Hz, the temperature was increased at 10°C/minute from 20°C to 160°C under a nitrogen atmosphere, and the storage elastic modulus (E') was measured. According to the obtained profile of the E', a value at 90°C was adopted as the storage elastic modulus. In a case where the measurement data of the E' does not indicate data at 90°C depending on sampling intervals (for example, the E' is obtained at a temperature of 89.5°C, and, after that, the E' is subsequently obtained at a temperature of 91°C), E' corresponding to a temperature of 90°C may be obtained by obtaining a gradient and an intercept from data between two points before and after 90°C.

[Reversible heat capacity (ΔCp)]

In a T-zero pan manufactured by TA Instruments or an aluminum pan (flat-plate-shaped), 5.0±0.2 mg of a film as a sample was weighed. When the sample was sealed in the pan, the films stacked and punched into a round shape (diameter of 4.5 mm) were used in order to obtain good adhesiveness with the pan bottom surface. The "good adhesiveness with the pan bottom surface" means a state where the film sample is not bent in the pan, and no space is formed between the films pressed firmly with a lid and stacked when the sample is sealed in the pan. Although the film which has yet to be punched may wrinkle, the wrinkles are preferably smoothed when the sample is punched. The shape and the size of the punched sample (punch) are not limited to the above-described ones as long as the sample is not bent and fits to the pan bottom surface.

The produced sample was measured by using a temperature-modulated differential scanning calorimeter (DSC) "DSC250" (manufactured by TA Instruments) in an MDSC (registered trademark) heat only mode at an average temperature increase rate of 2°C/min and a modulation cycle of 40 seconds, to obtain reversing heat flow.

In the reversing heat flow obtained in the measurement, ΔCp was obtained from a signal changed stepwise from a baseline. Specifically, at two inflection points of stepwise change from the baselines, extension lines of the baselines of the respective heat flows were drawn, a point of intersection of the extension line and the tangent line at each inflection point (Tg) was obtained, and difference in value of the horizontal axis between the points of intersection was set as ΔCp.

[Glass transition temperature (Tg)]

In a T-zero pan manufactured by TA Instruments or an aluminum pan (flat-plate-shaped), 5.0±0.2 mg of a film as a sample was weighed and heated for 30 seconds on a hot plate heated to 300°C, and the sample was melted. Thereafter, the sample was taken out from the hot plate by tweezers, and immediately immersed in liquid nitrogen for one minute, to produce a melted and quenched sample.

When the sample was sealed in the pan, the films stacked and punched into a round shape (diameter of 4.5 mm) were used in order to obtain good adhesiveness with the pan bottom surface.

The "good adhesiveness with the pan bottom surface" means a state where the film sample is not bent in the pan, and no space is formed between the films pressed firmly with a lid and stacked when the sample is sealed in the pan.

Although the film which has yet to be punched may wrinkle, the wrinkles are preferably smoothed when the sample is punched. The shape and the size of the punched sample (punch) are not limited to the above-described ones as long as the sample is not bent and fits to the pan bottom surface.

The melted and quenched sample having been produced was measured by using a temperature-modulated differential scanning calorimeter (DSC) "DSC250" (manufactured by TA Instruments) in an MDSC (registered trademark) heat only mode at an average temperature increase rate of 2°C/min and a modulation cycle of 40 seconds, to obtain reversing heat flow.

In the reversing heat flow obtained in the measurement, Tg appearing as a signal changed stepwise from a baseline was obtained. Specifically, at the lower-temperature side and the higher-temperature side relative to Tg, extension lines of the baselines of the respective heat flows were drawn, a point of intersection of the extension line and the tangent line at each inflection point (Tg) was obtained, values of the horizontal axis at the points of intersection were read, and an average of the value on the lower-temperature side and the value on the higher-temperature side was set as Tg.

[Shrinkage finish property]

The end portions of the heat-shrinkable film were welded with dioxolane, and a cylindrical label (label in which the main shrinkage direction of the heat-shrinkable film was circumferential direction) having a lay flat width of 115 mm×height of 157 mm was obtained. The label was put over a commercially available square PET bottle (with contents; "iMUSE" manufactured by Kirin Beverage Company, Limited), and was heat-shrunk through steam adjusted at 85°C (tunnel passing time was 30 seconds). The shrinkage finish property of the label was evaluated according to the following criteria.

<Sink mark (skirt)>

Difference between the lowermost portion of the label and a portion having the largest sink mark (skirt) was measured as a skirt amount, and evaluation was made according to the following criteria.

∘: The skirt amount was 2 mm or less.
×: The skirt amount was more than 2 mm.

<Jumping>

A distance between the lowermost portion (a contact portion between a floor and the bottle in the case of the bottle being placed on a horizontal floor) of the bottle, and the lowermost portion of the label was measured as a jumping distance, and evaluation was made according to the following criteria.

○: The jumping distance was 3 mm or less.
✕: The jumping distance was more than 3 mm.

<Shrinkage insufficiency>

The label attached to the bottle was touched by a hand, and a state of adhesion between the bottle and the label was evaluated according to the following criteria.

○: The label was not separated (adhered to the bottle).
✕: The label was separated (did not adhere to the bottle).

<Arrangement and preparation of polyester raw material>

[Polyester raw material A]

As a polyester raw material A, a mechanically recycled polyester material was prepared in the following procedure.

Foreign matter such as remaining beverage was washed away from PET bottles for beverage, and the PET bottles were thereafter pulverized to obtain flakes. The obtained flakes were stirred and washed in the presence of 3.5 weight% of sodium hydroxide solution at a flake concentration of 10 weight% at 85°C for 30 minutes. After the alkali washing, the flakes were taken out, and washed by using distilled water while being stirred at a flake concentration of 10 weight% at 25°C for 20 minutes.

Washing with water was repeated further twice with distilled water being changed. After the washing with water, the flakes were dried and melted by an extruder, fine foreign matter was filtered further twice while filters were changed such that the opening size was sequentially made finer, and filtered through a filter having the smallest opening size of 50 μm for the third time, to obtain the polyester raw material A having an intrinsic viscosity of 0.75 dl/g and an isophthalic acid content of 2.0 mol%.

[Polyester raw material B]

Into a stainless steel autoclave having a stirrer, a thermometer, and a partial reflux condenser, 100 mol% of dimethyl terephthalate (DMT) as a dicarboxylic acid component, and 100 mol% of ethylene glycol (EG) as a polyhydric alcohol component were put such that the content of ethylene glycol was 2.2 times the content of dimethyl terephthalate in molar ratio. 0.05 mol% (with respect to an acid component) of zinc acetate as a transesterification catalyst, and 0.225 mol% (with respect to the acid component) of antimony trioxide as a polycondensation catalyst were added, and transesterification was performed while generated methanol was distilled out of the system. Thereafter, polycondensation was performed at 280°C under a reduced-pressure condition of 26.7 Pa. At this time, silica (SILYSIA 266 manufactured by FUJI SILYSIA CHEMICAL LTD.; average particle diameter was 1.5 μm) was added as a lubricant such that the silica concentration was 10000 ppm, to obtain a polyester raw material B having an intrinsic viscosity of 0.72 dl/g. Table 1 indicates the composition.

[Synthesis of polyester raw materials C and F to H]

In the same method as for the polyester raw material B, polyester raw materials C and F to H having compositions indicated in Table 1 were obtained.

[Polyester raw material D]

As a polyester raw material D, a chemically recycled polyester material was prepared in the following procedure.

Attachments formed of a material other than polyester were removed from recovered polyester products, and a recovered bale was obtained. The recovered bale was put in a wet pulverizer and immersed in a reducing agent aqueous solution (100°C) containing 1.0 wt% of hydrosulfite and 0.3 wt% of thiourea dioxide in terms of concentration as a reducing agent for 60 minutes, to perform a deinking process by reduction cleaning. Thereafter, the obtained product was finely cut, then supplied to a melt-extruder, and melted at 260 to 270°C, unnecessary residual substances were removed through a screen changer, polymer was discharged from a die of the extruder, and stranded polymer flowed into a water chute and was pelletized by a pelletizer. In a first batch-wise reaction device, 13 wt% of the recovered pellets, 61 wt% of polyester resin, 25.93 wt% of ethylene glycol (EG), and 0.07 wt% of tetraethylammonium hydroxide (EAH) were put, increase of the temperature was started simultaneously with putting of the raw materials, and depolymerization was performed under a normal pressure.

The polyester low polymer generated through the depolymerization was transferred to a second batch-wise reaction device, and subjected to polycondensation at 290°C under a reduced pressure (1 mmHg or less), to obtain a chemically recycled polyester raw material D. Table 1 indicates the composition.

[Polyester raw material E]

In the same method as for the polyester raw material D, a polyester raw material E having a composition indicated in Table 1 was obtained.

In Table 1, TPA represents terephthalic acid, IPA represents isophthalic acid, EG represents ethylene glycol, NPG represents neopentyl glycol, CHDM represents 1,4-cyclohexanedimethanol, DEG represents diethylene glycol (may contain a by-product in polymerization), and BD represents 1,4-butanediol.

The intrinsic viscosities of the respective polyesters were as follows: A: 0.75 dl/g, B: 0.72 dl/g, C: 0.75 dl/g, D: 0.75 dl/g, E: 0.75 dl/g, F: 0.75 dl/g, G: 0.78 dl/g, and H: 1.20 dl/g. Each polyester was formed into chips as appropriate.

[Table 1]

| Polyester raw material | Polyester raw material composition (mol%) | | | | | | | Added amount (ppm) of lubricant |
| --- | --- | --- | --- | --- | --- | --- | --- | --- |
| | Acid component | | Polyhydric alcohol component | | | | | |
| | TPA | IPA | EG | NPG | CHDM | DEG | BD | |
| A | 98 | 2 | 99 | - | - | 1 | - | - |
| B | 100 | - | 99 | - | - | 1 | - | 10000 |
| C | 100 | - | 68 | 30 | - | 2 | - | - |
| D | 100 | - | 68 | - | 30 | 2 | - | - |
| E | 100 | - | 69 | 22 | - | 9 | - | - |
| F | 100 | - | 58 | - | 30 | 12 | - | - |
| G | 82 | 18 | 100 | - | - | - | - | - |
| H | 100 | - | - | - | - | - | 100 | - |

(Example 1)

The polyester A, the polyester B, the polyester C, and the polyester H were mixed at a mass ratio of 12:5:72:11 and melted by increasing the temperature to 275°C in an extruder. The melted resin was discharged from a T-die, and taken up while being cooled on a chill roll which was set to have a surface temperature of 15°C, to obtain an unstretched laminated film. The temperature and humidity in the unstretched film production chamber were kept constant at 20°C and 50% RH by using a dehumidifying air conditioner, and the dew point was 9°C. A distance between the melted resin outlet of the die and the chill roll was 20 mm, and, at this time, the average cooling rate was 86°C/second.

The obtained unstretched film was guided to a transverse stretching machine (tenter), preheating was performed until the film temperature became 90°C in a state where both ends of the film were held by clips, and the film was thereafter stretched 4.2 times at the film temperature of 88°C in the width direction. Subsequently, heat treatment was performed at 92°C for five seconds. While both edge portions of the film were cut and removed, a uniaxially stretched film having a thickness of about 30 μm was wound into a roll-like shape. The characteristics of the obtained film were evaluated in the above-described methods. Table 2 indicates film formation conditions and evaluation results.

(Examples 2 and 3)

Film formation was performed in the same manner as in Example 1, and a uniaxially stretched film having a thickness of about 40 μm was wound into a roll-like shape. The characteristics of the obtained film were evaluated in the above-described methods. Table 2 indicates film formation conditions and evaluation results.

(Example 4)

The polyester A, the polyester B, and the polyester E were mixed at a mass ratio of 25:5:70 and melted by increasing the temperature to 275°C in an extruder. The melted resin was discharged from a T-die, and taken up while being cooled on a chill roll which was set to have a surface temperature of 15°C, to obtain an unstretched laminated film.
The temperature and humidity in the unstretched film production chamber were kept constant at 20°C and 50% RH by using a dehumidifying air conditioner, and the dew point was 9°C. A distance between the melted resin outlet of the die and the chill roll was 30 mm. Furthermore, immediately after the melted resin landed on the chill roll, air was sent from a multi-duct at an air sending speed of 10 m/second to actively cool a surface opposite to a surface in contact with the chill roll. At this time, the average cooling rate was 105°C/second.
The obtained unstretched film was guided to a longitudinal stretching machine in which a plurality of roll groups were continuously arranged, preheating was performed by a preheating roll until the film temperature became 80°C, and the film was thereafter stretched 1.2 times in the longitudinal direction by utilizing a rotation speed difference between a low-speed rotation roll set to have a surface temperature of 80°C and a high-speed rotation roll set to have a surface temperature of 30°C.
The film having been subjected to the longitudinal stretching was guided to a transverse stretching machine (tenter), preheating was performed until the film temperature became 90°C in a state where both end portions of the film were held by clips, and the film was thereafter stretched 4.2 times at the film temperature of 85°C in the width direction. Subsequently, heat treatment was performed at 86°C for five seconds. Next, while both edge portions of the film were cut and removed, a biaxially stretched film having a thickness of about 40 μm was wound into a roll-like shape. The characteristics of the obtained film were evaluated in the above-described methods. Table 2 indicates film formation conditions and evaluation results.

(Example 5)

Film formation was performed in the same manner as in Example 4, and a uniaxially stretched film having a thickness of about 30 μm was wound into a roll-like shape. The characteristics of the obtained film were evaluated in the above-described methods. Table 2 indicates film formation conditions and evaluation results.

(Examples 6 to 8)

Film formation was performed in the same manner as in Example 1 or 4, and a uniaxially stretched film having a thickness of about 40 μm was wound into a roll-like shape. The characteristics of the obtained film were evaluated in the above-described methods. Table 2 indicates film formation conditions and evaluation results.

(Example 9)

An unstretched film was produced in the same manner as in Example 3, and thereafter guided to a longitudinal stretching machine in which a plurality of roll groups were continuously arranged. After being preheated by a preheating roll until the film temperature became 100°C, the film was stretched 5.2 times in the longitudinal direction between a low-speed rotation roll set to have a surface temperature of 95°C and a high-speed rotation roll set to have a surface temperature of 30°C by utilizing a rotation speed difference.
The film having been subjected to the longitudinal stretching was guided to a transverse stretching machine (tenter), preheating was performed until the film temperature became 110°C in a state where both end portions of the film were held by clips, and the film was thereafter stretched 1.8 times at the film temperature of 85°C in the width direction, and heat treatment was performed at 92°C for five seconds. Subsequently, while both edge portions of the film were cut and removed, a biaxially stretched film having a thickness of about 30 μm in which the main shrinkage direction was the longitudinal direction was wound into a roll-like shape. The characteristics of the obtained film were evaluated in the above-described methods. Table 2 indicates film formation conditions and evaluation results.

(Comparative Example 1)

A uniaxially stretched film roll was obtained in the same manner as in Example 1 except that the temperature and humidity in the chamber and the distance between the die and the chill roll were changed in the casting step. The average cooling rate in the casting step of Comparative Example 1 was 31°C/second. Table 2 indicates manufacturing conditions and evaluation results.

(Comparative Example 2)

A uniaxially stretched film roll was obtained in the same manner as in Example 1 except that the transverse stretching ratio was set to 5.7 times in the transverse stretching step. Table 2 indicates manufacturing conditions and evaluation results.

(Comparative Example 3)

A uniaxially stretched film roll was obtained in the same manner as in Example 1 except that the temperature in the heat treatment step was set to 125°C. Table 2 indicates manufacturing conditions and evaluation results.

(Comparative Example 4)

A biaxially stretched film roll was obtained in the same manner as in Example 4 except that the longitudinal stretching ratio was set to 3.5 times. Table 2 indicates manufacturing conditions and evaluation results.

(Comparative Example 5)

The polyester raw material was melt-extruded in the same manner as in Example 1, and guided to a chill roll. At this time, the temperature and humidity in the unstretched film production chamber were 30°C/80%RH, the dew point was 26°C, and the chill roll temperature was set to 15°C. Dew condensation was observed on the chill roll, and the melted resin was wound around the chill roll during film formation, so that each parameter could not be evaluated. Table 2 indicates manufacturing conditions and evaluation results.

(Comparative Example 6)

A uniaxially stretched film roll was obtained in the same manner as in Example 3 except that the temperature and humidity in the chamber and the distance between the die and the chill roll and the like were changed in the casting step, and the transverse stretching ratio in the transverse stretching step and the temperature in the heat treatment step were changed. Table 2 indicates manufacturing conditions and evaluation results.

[Table 2A]

| | | | Example 1 | Example 2 | Example 3 | Example 4 | Example 5 | Example 6 | Example 7 |
|---|---|---|---|---|---|---|---|---|---|
| Blending ratio of raw material | Polyester A | wt% | 12 | 10 | 25 | 25 | 25 | 25 | 25 |
| | Polyester B | wt% | 5 | 5 | 5 | 5 | 5 | 5 | 5 |
| | Polyester C | wt% | 72 | 0 | 0 | 0 | 0 | 0 | 0 |
| | Polyester D | wt% | 0 | 60 | 0 | 0 | 0 | 0 | 0 |
| | Polyester E | wt% | 0 | 0 | 70 | 70 | 70 | 0 | 0 |
| | Polyester F | wt% | 0 | 0 | 0 | 0 | 0 | 70 | 70 |
| | Polyester G | wt% | 0 | 25 | 0 | 0 | 0 | 0 | 0 |
| | Polyester H | wt% | 11 | 0 | 0 | 0 | 0 | 0 | 0 |
| Blending ratio of recycled material | | wt% | 12 | 70 | 95 | 95 | 95 | 25 | 25 |
| Monomer composition | TPA | mol% | 99.8 | 95.3 | 99.5 | 99.5 | 99.5 | 99.5 | 99.5 |
| | IPA | mol% | 0.2 | 4.7 | 0.5 | 0.5 | 0.5 | 0.5 | 0.5 |
| | EG | mol% | 65.8 | 80.7 | 78.0 | 78.0 | 78.0 | 70.3 | 70.3 |
| | NPG | mol% | 21.6 | 0.0 | 15.4 | 15.4 | 15.4 | 0.0 | 0.0 |
| | CHDM | mol% | 0 | 18.0 | 0.0 | 0.0 | 0.0 | 21.0 | 21.0 |
| | DEG | mol% | 1.6 | 1.4 | 6.6 | 6.6 | 6.6 | 8.7 | 8.7 |
| | BD | mol% | 11.0 | 0 | 0 | 0 | 0 | 0 | 0 |
| Casting | Temperature in chamber | °C | 20 | 25 | 15 | 20 | 15 | 15 | 25 |
| | Humidity in chamber | % | 50 | 40 | 50 | 50 | 50 | 50 | 70 |
| | Dew point in chamber | °C | 9 | 11 | 5 | 9 | 5 | 5 | 24 |
| | Chill roll temperature | °C | 15 | 15 | 10 | 15 | 10 | 10 | 28 |
| | Distance between die and chill roll | mm | 20 | 50 | 50 | 30 | 25 | 30 | 30 |
| | Use of multi-duct | - | not used | not used | not used | used | used | not used | used |
| | Average cooling rate | °C/second | 86 | 73 | 76 | 105 | 116 | 81 | 79 |
| Longitudinal stretching | Stretching temperature | °C | - | - | - | 80 | - | - | 80 |
| | Stretching ratio | - | - | - | - | 1.2 | - | - | 1.3 |

| | | | Example 1 | Example 2 | Example 3 | Example 4 | Example 5 | Example 6 | Example 7 |
|---|---|---|---|---|---|---|---|---|---|
| Transverse stretching | Preheating temperature | °C | 90 | 90 | 85 | 90 | 85 | 82 | 85 |
| | Stretching temperature | °C | 88 | 88 | 82 | 85 | 82 | 78 | 84 |
| | Stretching ratio | - | 4.2 | 4.9 | 4.5 | 4.2 | 3.6 | 3.8 | 4.3 |
| Heat treatment | Temperature | °C | 92 | 92 | 83 | 86 | 92 | 82 | 85 |
| Thickness | | μm | 30 | 40 | 40 | 40 | 30 | 40 | 40 |
| Skirt ratio after 10% shrinkage | Longitudinal direction/width direction | % | 6.1 | 7.2 | 5.6 | 4.2 | 2.8 | 5.2 | 3.4 |
| Shrinkage stress at 90°C after 10% shrinkage | Width direction | MPa | 7.8 | 8.8 | 7.3 | 6.2 | 2.3 | 5.2 | 4.1 |
| Heat shrinkage rate in hot water at 80°C | Longitudinal direction | % | -1.0 | -1.2 | 0.5 | 4.5 | -1.5 | 2.1 | 5.6 |
| | Width direction | % | 55.7 | 71.4 | 59.2 | 42.2 | 28.4 | 57.4 | 42.6 |
| Average refractive index | | - | 1.5724 | 1.5732 | 1.5765 | 1.5781 | 1.5777 | 1.5762 | 1.5788 |
| Storage elastic modulus at 90°C | Longitudinal direction | MPa | 9 | 10 | 31 | 57 | 34 | 29 | 60 |
| Reversible heat capacity difference | | J/g·K | 0.27 | 0.26 | 0.25 | 0.24 | 0.24 | 0.25 | 0.23 |
| Glass transition temperature Tg | | °C | 70 | 78 | 67 | 67 | 67 | 65 | 65 |
| Evaluation result of shrinkage finish property | Sink mark | - | ○ | ○ | ○ | ○ | ○ | ○ | ○ |
| | Jumping | - | ○ | ○ | ○ | ○ | ○ | ○ | ○ |
| | Shrinkage insufficiency | - | ○ | ○ | ○ | ○ | ○ | ○ | ○ |

EP 4 741 448 A1

20

[Table 2B]

| | | | Example 8 | Example 9 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|
| Blending ratio of raw material | Polyester A | wt% | 40 | 25 | 12 | 25 | 25 | 25 | 25 | 25 |
| | Polyester B | wt% | 5 | 5 | 5 | 5 | 5 | 5 | 5 | 5 |
| | Polyester C | wt% | 55 | 0 | 35 | 0 | 0 | 0 | 0 | 0 |
| | Polyester D | wt% | 0 | 0 | 0 | 0 | 0 | 0 | 0 | 0 |
| | Polyester E | wt% | 0 | 70 | 48 | 70 | 70 | 70 | 0 | 70 |
| | Polyester F | wt% | 0 | 0 | 0 | 0 | 0 | 0 | 70 | 0 |
| | Polyester G | wt% | 0 | 0 | 0 | 0 | 0 | 0 | 0 | 0 |
| | Polyester H | wt% | 0 | 0 | 0 | 0 | 0 | 0 | 0 | 0 |
| Blending ratio of recycled material | | wt% | 40 | 95 | 60 | 95 | 95 | 95 | 25 | 95 |
| Monomer composition | TPA | mol% | 99.2 | 99.5 | 99.8 | 99.5 | 99.5 | 99.5 | 99.5 | 99.5 |
| | IPA | mol% | 0.8 | 0.5 | 0.5 | 0.5 | 0.5 | 0.5 | 0.5 | 0.5 |
| | EG | mol% | 82.0 | 78.0 | 73.8 | 78.0 | 78.0 | 78.0 | 70.3 | 78.0 |
| | NPG | mol% | 16.5 | 15.4 | 21.1 | 15.4 | 15.4 | 15.4 | 0.0 | 15.4 |
| | CHDM | mol% | 0.0 | 0.0 | 0 | 0 | 0 | 0 | 21.0 | 0 |
| | DEG | mol% | 1.6 | 6.6 | 5.2 | 6.6 | 6.6 | 6.6 | 0.0 | 6.6 |
| | BD | mol% | 0 | 0 | 0 | 0 | 0 | 0 | 0 | 0 |
| Casting | Temperature in chamber | °C | 15 | 15 | 30 | 20 | 20 | 20 | 30 | 20 |
| | Humidity in chamber | % | 50 | 50 | 80 | 50 | 50 | 50 | 80 | 50 |
| | Dew point in chamber | °C | 5 | 5 | 26 | 9 | 9 | 9 | 26 | 9 |
| | Chill roll temperature | °C | 10 | 10 | 40 | 15 | 15 | 15 | 15 | 15 |
| | Distance between die and chill roll | mm | 30 | 50 | 80 | 50 | 50 | 40 | 30 | 160 |
| | Use of multi-duct | - | used | not used | not used | not used | not used | not used | not used | not used |
| | Average cooling rate | °C/second | 96 | 76 | 31 | 72 | 72 | 79 | - | 37 |
| Longitudinal stretching | Stretching temperature | °C | - | 95 | - | - | - | 85 | - | - |
| | Stretching ratio | - | - | - | 5.2 | - | - | - | 3.5 | - | - |

| | | | Example 8 | Example 9 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|
| Transverse stretching | Preheating temperature | °C | 90 | 110 | 82 | 95 | 90 | 85 | - | 85 |
| | Stretching temperature | °C | 88 | 85 | 80 | 90 | 85 | 88 | - | 82 |
| | Stretching ratio | - | 3.8 | 1.8 | 4.0 | 5.7 | 4.2 | 4.7 | - | 4.0 |
| Heat treatment | Temperature | °C | 88 | 92 | 92 | 90 | 125 | 90 | - | 92 |
| Thickness | | μm | 40 | 30 | 40 | 40 | 40 | 40 | - | 30 |
| Skirt ratio after 10% shrinkage | Longitudinal direction/ width direction | % | 4.9 | 4.4 | 8.5 | 9.1 | 1.7 | 11.3 | - | 8.7 |
| Shrinkage stress at 90°C after 10% shrinkage | Width direction | MPa | 6.9 | 4.2 | 6.1 | 14.6 | 1.8 | 12 | - | 5.8 |
| Heat shrinkage rate in hot water at 80°C | Longitudinal direction | % | 2.2 | 35.8 | 3.2 | 5.7 | -3.2 | 38.4 | - | -2.1 |
| | Width direction | % | 44.3 | 9.3 | 58.1 | 75.2 | 12.3 | 63.6 | - | 56.3 |
| Average refractive index | | - | 1.5766 | 1.5720 | 1.5688 | 1.5721 | 1.5794 | 1.5811 | - | 1.5689 |
| Storage elastic modulus at 90°C | Longitudinal direction | MPa | 31 | 8 | 5 | 8 | 78 | 123 | - | 6 |
| Reversible heat capacity difference | | J/g·K | 0.24 | 0.28 | 0.31 | 0.27 | 0.22 | 0.18 | - | 0.29 |
| Glass transition temperature Tg | | °C | 75 | 65 | 72 | 67 | 67 | 67 | - | 67 |
| Evaluation result of shrinkage finish property | Sink mark | - | ○ | ○ | × | × | ○ | × | - | × |
| | Jumping | - | ○ | ○ | ○ | × | ○ | ○ | - | ○ |
| | Shrinkage insufficiency | - | ○ | ○ | ○ | ○ | × | ○ | - | ○ |

EP 4 741 448 A1

All of the polyester-based heat-shrinkable films according to the examples of the present invention satisfied predetermined characteristics, and had excellent finish property.

Meanwhile, in Comparative Example 1, the average cooling rate for the melted resin was 31°C/second and was thus low. Therefore, the average refractive index and the storage elastic modulus were each below the predetermined range, and the skirt ratio was more than 8%. As a result, the evaluation of the shrinkage finish property indicates that the sink mark was large and Comparative Example 1 was not appropriate as a label.

In Comparative Example 2, the shrinkage rate at 80°C in the main shrinkage direction and the heat shrinkage stress were each beyond the predetermined range. Therefore, the skirt ratio was more than 8%, and the film had a poor finish property of the label similarly to Comparative Example 1.

In Comparative Example 3, the shrinkage rate at 80°C in the main shrinkage direction was less than 20%. Therefore, shrinkage was evaluated as being insufficient in the evaluation of the shrinkage finish property.

In Comparative Example 4, the heat shrinkage stress was more than 10 MPa, and furthermore, the shrinkage rate at 80°C in the direction orthogonal to the main shrinkage direction was more than 10%. Thus, the skirt ratio was more than 8%. As a result, also in Comparative Example 4, the film had a poor finish property similarly to Comparative Examples 1 and 2.

INDUSTRIAL APPLICABILITY

The present invention can provide the heat-shrinkable polyester film having an excellent shrinkage finish property even when a recycled material is used without limiting a raw material composition.

**Claims**

1. A heat-shrinkable polyester film comprising an ethylene terephthalate unit as a main constituent component, and satisfying the following requirements (1) to (4):

   (1) a skirt ratio measured after the film is shrunk by 10% in a main shrinkage direction in hot air at 90°C and then heat-treated for one minute while being fixed in the 10% shrunk state is 1% or more and 8% or less;
   (2) a maximum heat shrinkage stress in the main shrinkage direction is 1 MPa or more and 10 MPa or less, as measured while the film is heat-treated in hot air at 90°C for one minute in a state fixed at a 10% shrinkage after being shrunk by 10% in the main shrinkage direction in hot air at 90°C;
   (3) a shrinkage rate when the film is immersed in hot water at 80°C for 10 seconds is 20% or more and 72% or less in the main shrinkage direction; and
   (4) an average refractive index of the film is 1.57 or more and 1.585 or less.

2. The heat-shrinkable polyester film according to claim 1, wherein a storage elastic modulus at 90°C in a direction orthogonal to the main shrinkage direction of the film is 8 MPa or more and 100 MPa or less.

3. The heat-shrinkable polyester film according to claim 1, wherein a shrinkage rate when the film is immersed in hot water at 80°C for 10 seconds is -10% or more and 10% or less in a direction orthogonal to the main shrinkage direction.

4. The heat-shrinkable polyester film according to claim 1, wherein the film contains 1 mol% or more and 30 mol% or less of one or more monomer components selected from the group consisting of isophthalic acid, neopentyl glycol, 1,4-cyclohexanedimethanol, 1,4-butanediol, and diethylene glycol as constituent components of polyester constituting the film.

5. The heat-shrinkable polyester film according to claim 1, wherein the film contains a mechanically recycled and/or chemically recycled polyester raw material as a raw material constituting the film.

6. The heat-shrinkable polyester film according to claim 1, wherein a reversible heat capacity difference between before and after a glass transition temperature is 0.2 J/g·K or more and 0.3 J/g·K or less.

7. The heat-shrinkable polyester film according to claim 1, wherein a glass transition temperature is 50°C or higher and 100°C or lower.

8. The heat-shrinkable polyester film according to claim 1, wherein the ethylene terephthalate unit is 60 mol% or more with respect to 100 mol% of a polyester-constituting unit.

9. A heat-shrinkable label using the heat-shrinkable polyester film according to any one of claims 1 to 8 for at least a part thereof.

10. A package using the heat-shrinkable polyester film according to any one of claims 1 to 8.

11. A package using the label according to claim 9.

[Fig.1]

(Before shrinkage)  Sample width

20mm

Chuck fixing portion

(After shrinkage)

Sample length
150mm

Distance between marker lines
100mm

Sample width after shrinkage

Distance between chucks
90mm

## INTERNATIONAL SEARCH REPORT

| | |
|---|---|
| International application No. | |
| | **PCT/JP2024/023265** |

**A. CLASSIFICATION OF SUBJECT MATTER**

*C08J 5/18*(2006.01)i; *B29C 61/06*(2006.01)i; *G09F 3/04*(2006.01)i; *B29K 67/00*(2006.01)n; *B29K 105/02*(2006.01)n

FI:　C08J5/18 CFD; B29C61/06; G09F3/04 C; B29K67:00; B29K105:02

According to International Patent Classification (IPC) or to both national classification and IPC

**B. FIELDS SEARCHED**

Minimum documentation searched (classification system followed by classification symbols)

　　C08J5/18; B29C61/06; G09F3/04

Documentation searched other than minimum documentation to the extent that such documents are included in the fields searched

　　Published examined utility model applications of Japan 1922-1996
　　Published unexamined utility model applications of Japan 1971-2024
　　Registered utility model specifications of Japan 1996-2024
　　Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-524921 A (SKC CO., LTD.) 08 September 2011 (2011-09-08)<br>entire text | 1-11 |
| A | JP 2011-184690 A (SKC CO., LTD.) 22 September 2011 (2011-09-22)<br>entire text | 1-11 |
| A | WO 2016/199809 A1 (TOYOBO CO., LTD.) 15 December 2016 (2016-12-15)<br>entire text | 1-11 |
| A | JP 2009-160921 A (TOYO BOSEKI KABUSHIKI KAISHA) 23 July 2009 (2009-07-23)<br>entire text | 1-11 |
| A | WO 2010/064811 A2 (SKC CO., LTD.) 10 June 2010 (2010-06-10)<br>entire text | 1-11 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 September 2024** | **24 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/023265**

| Patent document cited in search report | | | Publication date (day/month/year) | Patent family member(s) | | | Publication date (day/month/year) |
|---|---|---|---|---|---|---|---|
| JP | 2011-524921 | A | 08 September 2011 | WO | 2009/151290 | A2 | |
| | | | | KR | 10-2009-0128743 | A | |
| | | | | CN | 102066465 | A | |
| JP | 2011-184690 | A | 22 September 2011 | US | 2011/0224369 | A1 | |
| | | | | EP | 2365025 | A1 | |
| | | | | KR | 10-0981129 | B1 | |
| | | | | CN | 102190867 | A | |
| WO | 2016/199809 | A1 | 15 December 2016 | US | 2018/0162616 | A1 | |
| | | | | CN | 107708966 | A | |
| | | | | KR | 10-2018-0018553 | A | |
| JP | 2009-160921 | A | 23 July 2009 | US | 2010/0256309 | A1 | |
| | | | | WO | 2009/075333 | A1 | |
| | | | | EP | 2233275 | A1 | |
| | | | | KR | 10-2010-0099270 | A | |
| | | | | CN | 101918196 | A | |
| WO | 2010/064811 | A2 | 10 June 2010 | KR | 10-2010-0062090 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011094159 A
- JP 5971897 B
- JP 6802535 B
- JP 2023110168 A

**Non-patent literature cited in the description**

- **F. J. BALTA CALLEJA** ; **M. C. GARCIA GUTIER-REZ** ; **D. R. RUEDA** ; **S. PICCAROLO**. Structure development in poly (ethylene terephthalate) quenched from the melt at high cooling rates: X-ray scattering and microhardness study. *Polymer*, 2000, vol. 41, 4143-4148

- **ATSUSHI TANIGUCHI** ; **MIKO CAKMAK**. The suppression of strain induced crystallization in PET through sub-micron TiO2 particle incorporation. *Polymer*, 2004, vol. 45, 6647-6654